# FASCICULE DE BREVET EUROPEEN

(11) **EP 0 872 177 B1**
(45) Date de publication et mention de la délivrance du brevet: **30.10.2002**
(21) Numéro de dépôt: 98201105.8
(22) Date de dépôt: 14.04.1998
(51) Int. Cl.: A01K 1/00

(54) **Elément de séparation pour un gite pour animaux**
Raumtrennelement für Tierställe
Partitioning wall for animal barn

(30) Priorité: 16.04.1997 BE 9700349
(43) Date de publication de la demande: 21.10.1998
(73) Titulaire: Paneltim N.V., 8920 Langemark (BE)
(72) Inventeur: Deltour, Ludo, 8920 Langemark (BE)
(74) Mandataire: Donné, Eddy

(56) Documents cités:
- DE-A- 3 607 430
- FR-A- 2 562 763
- FR-A- 2 660 686

## Description

La présente invention concerne un élément de séparation pour un emplacement où séjournent des animaux, comprenant une structure fermée réalisée en une matière synthétique, dans laquelle on prévoit une ou plusieurs ouvertures transversales.

Des éléments de séparation de ce type sont utilisés entre autres pour réaliser des séparations dans des étables destinées à des animaux. Toutefois, le domaine d'application de ces éléments de séparation concerne surtout l'élevage intensif tel que par exemple des élevages de porcs, dans lesquels on utilise les éléments pour subdiviser une étable en cages séparées.

Dans l'élevage intensif, les étables doivent être très régulièrement nettoyées en profondeur entre autres pour empêcher, pour autant que possible, la prolifération de bactéries et de germes de maladies. Entre autres, après avoir retiré un groupe d'animaux d'une étable et avant qu'un autre groupe d'animaux n'y prennent place, l'étable doit être nettoyée et désinfectée de manière particulièrement approfondie pour empêcher la transmission de maladies éventuelles des animaux du premier groupe aux animaux du nouveau groupe. Par conséquent, il est extrêmement important de pouvoir nettoyer très minutieusement les emplacements où séjournent les animaux, par conséquent également les éléments de séparation prévus. En outre, le nettoyage doit pouvoir être réalisé de manière rapide et efficace.

Il existe des éléments de séparation de ce type réalisés en béton. Ils sont constitués principalement par une plaque en béton dans laquelle on prévoit une série d'évidements oblongs disposés les uns à côté des autres dans une rangée horizontale. Ces évidements s'étendent en direction verticale et ne sont souvent prévus que dans la partie supérieure de la plaque. Les évidements possèdent la forme d'un petit rectangle ou s'écartent uniquement de cette forme par le fait qu'ils présentent des coins arrondis ou par le fait qu'on prévoit des rétrécissements et/ou des élargissements locaux des ouvertures. Les parois, qui délimitent ces évidements, possèdent, vu en direction transversale, une allure plane et sont inclinées par rapport à une surface transversale verticale, si bien que les parois de chaque ouverture divergent dans la même direction. Cette dernière caractéristique est nécessaire pour pouvoir facilement démouler les éléments en béton.

Un inconvénient majeur lié à ces éléments de séparation en béton réside dans le fait qu'un nettoyage et une désinfection minutieux de ces derniers sont très compliqués et prennent beaucoup de temps. Cet inconvénient provient du fait qu'entre autres, le béton possède une structure poreuse, si bien que, même après un nettoyage minutieux, des bactéries ou des germes de maladies peuvent subsister dans les espaces creux internes du béton. Ceci a inévitablement des effets néfastes sur la santé des animaux.

Un autre inconvénient lié à ces éléments de séparation réside dans le fait que la saleté se fixe aisément sur les parois des ouvertures, tandis que ces ouvertures sont en outre difficilement accessibles pour leur nettoyage, ce qui rend le nettoyage de ces éléments plus compliqué.

Un autre inconvénient encore lié à ces éléments de séparation en béton réside dans le fait que les éléments peuvent aisément subir des dégradations autour des ouvertures, provoquées par les animaux, étant donné que les animaux peuvent facilement s'agripper sur les arêtes cunéiformes autour de ces ouvertures.

Un autre élément de séparation connu est réalisé en une matière synthétique et est façonné sous la forme d'un panneau rectangulaire fermé relativement étroit et long. Pour la formation des séparations entre les cages, on fixe plusieurs panneaux de ce type horizontalement l'un par-dessus l'autre et on les raccorde l'un contre l'autre. Pour obtenir des ouvertures dans les séparations, on fixe une série de panneaux, de préférence les panneaux qui forment la partie supérieure de la séparation, l'un par-dessus l'autre avec un espace intermédiaire vertical.

Un inconvénient lié à une séparation de ce type réside dans le fait que les animaux peuvent s'appuyer avec leurs pattes sur le côté supérieur d'un panneau s'étendant en dessous d'une ouverture, si bien que la séparation peut être utilisée à la manière d'un râtelier pour y grimper. De ce fait, des animaux peuvent se blesser ou encore blesser d'autres animaux et/ou sauter par-dessus la séparation.

Un autre inconvénient lié à une séparation de ce type réside dans le fait qu'entre les panneaux qui sont prévus pour venir se raccorder l'un par-dessus l'autre et l'un contre l'autre, on obtient des joints dans lesquels des saletés peuvent s'accumuler. L'élimination de ces saletés ayant abouti dans ces joints est très compliquée et prend beaucoup de temps.

Un autre inconvénient encore réside dans le fait que, sur le côté supérieur libre approximativement horizontal des panneaux qui s'étendent en dessous d'une ouverture, de la saleté se fixe aisément, tandis que ces côtés supérieurs sont difficilement accessibles pour leur nettoyage.

De même, dans ces éléments, on constate que les animaux peuvent endommager de manière relativement aisée les bords des panneaux s'étendant au-dessus et en dessous des ouvertures en les mordant.

Un autre élément de séparation connu en matière synthétique est décrit dans DE-A-3.607.430. Il réalisé sous forme d'un panneau massif pourvu de nervures de renforcement et comportant des ouvertures, qui peut être mieux nettoyé que les éléments de séparation mentionnés ci-dessus. Toutefois, cet élément requiert une quantité de matière synthétique relativement importante pour obtenir la rigidité requise. Outre la consommation élevée en matières premières, ces éléments ont également pour inconvénient que leur poids est relativement élevé par rapport à leur épaisseur.

Du point de vue de la technique de l'élevage, il est extrêmement important de prévoir des ouvertures dans les séparations. En tout cas, il est connu que des animaux qui doivent séjourner pendant des laps de temps prolongés entre des parois fermées sont très sensibles au stress. On appelle cela "l'effet de caisse". Une cause de nervosité permanente chez les animaux réside par exemple dans le fait que des animaux se trouvant de part et d'autre d'une séparation peuvent s'entendre, mais ne peuvent pas se voir. Une situation de ce type est très défavorable pour l'état de santé général des animaux et, par conséquent, également pour la qualité de la viande qui provient de ces animaux.

En outre, les ouvertures pratiquées dans les séparations sont également nécessaires pour obtenir une bonne circulation d'air au niveau des animaux. Etant donné que les séparations sont manifestement plus hautes que les animaux, cette circulation d'air sera en tout cas insuffisante si l'on prévoit des séparations exemptes d'ouvertures. Un renouvellement d'air insuffisant a pour conséquence que l'air régnant dans les cages possède un degré d'humidité trop élevé et que la concentration en ammoniac et en CO gazeux à hauteur des animaux est trop élevée, ce qui provoque à son tour une atmosphère oppressante, des irritations oculaires, des inflammations nasales, des syndromes de grippe complexes et des inflammations pulmonaires et intestinales.

L'objet de la présente invention est de prévoir un élément de séparation présentant une structure fermée réalisée en une matière synthétique dans laquelle on prévoit une ou plusieurs ouvertures transversales, qui ne possède pas les inconvénients liés aux éléments de séparation connus réalisés en matière synthétique.

Cet objet est réalisé en prévoyant, conformément à l'invention, un élément de séparation pour un emplacement où séjournent des animaux, muni des caractéristiques indiquées dans le premier paragraphe de la présente description, chaque ouverture étant délimitée par des parois possédant une section transversale convexe, tandis que la structure fermée comprend un ou plusieurs espaces creux internes dans lesquels on prévoit des nervures.

En conférant cette forme aux parois de la ou des ouvertures, on obtient une paroi délimitant une ouverture par le bas, qui est pratiquement exempte de partie horizontale. Etant donné que les parois, grâce à leur forme convexe en section transversale, possèdent des flancs orientés latéralement, elles sont en outre bien accessibles. Grâce à cette forme, on peut également réaliser la paroi en les munissant de flancs qui possèdent un angle d'inclinaison prononcé par rapport à une surface transversale verticale. Grâce à la forme des parois des ouvertures, d'une part une quantité de saletés de loin inférieure va se fixer sur ces parois et, d'autre part, le nettoyage de ces parois pourra également être réalisé plus rapidement, plus facilement et plus minutieusement que dans les éléments de séparation connus.

On peut réaliser les parois de chaque ouverture de telle sorte qu'elles possèdent, à partir de chaque côté de l'élément de séparation, un flanc dont l'inclinaison est orientée vers le milieu de l'ouverture. Entre chaque côté de l'élément de séparation et chaque paroi d'une ouverture, on obtient alors un angle obtus. Ainsi, il est beaucoup plus difficile pour les animaux de saisir ce bord avec leurs dents.

Grâce au fait que l'on réalise l'élément de séparation selon la présente invention en une matière synthétique, on obtient un produit qui peut être nettoyé de manière très minutieuse, de manière très facile et de manière très rapide et qui, en outre, manifeste une très bonne résistance contre les substances chimiques, les champignons, les bactéries et les désinfectants présents dans les étables. De même, la corrosion ou la pourriture de l'élément de séparation est totalement exclue. En outre, on peut réaliser l'élément en une matière synthétique qui est aisément recyclable.

On peut réaliser un produit de ce type à partir d'une matière synthétique conformément à un procédé de production relativement simple tel que par exemple le moulage par injection ou "le reactive injection moulding". En l'occurrence, l'obtention de la rigidité élevée et de la résistance aux chocs élevée requises ne pose aucun problème. Grâce aux espaces creux internes munis de nervures, on maintient une très faible consommation en matières premières et on obtient des éléments de séparation dont le poids est peu élevé par rapport à leur épaisseur. En utilisant des matières synthétiques déterminées, on obtient en outre également des coûts en matières premières relativement peu élevés. Ainsi, l'élément de séparation selon la présente invention peut être réalisé avec des coûts de production relativement faibles.

Dans une forme de réalisation préférée de l'élément de séparation selon la présente invention, la section transversale des parois citées possède une forme principalement circulaire.

Ainsi, on obtient, d'une part, un dépôt de saletés minimal sur ces parois et, d'autre part, une accessibilité et une possibilité de nettoyage optimales de ces parois. En outre, grâce à ces parois, on obtient une très bonne conduction du courant d'air à travers l'ouverture, ce qui favorise la circulation d'air au niveau des animaux.

Dans une forme de réalisation particulièrement préférée, l'élément de séparation comprend deux parois fermées écartées l'une de l'autre sur une certaine distance, tandis qu'on prévoit, entre ces parois, une structure nervurée qui comprend plusieurs nervures se raccordant aux deux parois et se croisant l'une l'autre.

Grâce à ces nervures, un élément de séparation, dont on a scié une partie, reste toujours complètement fermé du côté où l'on a scié la partie. Ceci est entre autres important pour les qualités hygiéniques de l'élément de séparation. Par conséquent, on peut toujours adapter les dimensions de manière simple, tandis que l'élément adapté conserve ses qualités initiales.

Lorsque l'élément de séparation comprend deux parties se raccordant l'une à l'autre en suivant une surface de contact longitudinale, les deux parties peuvent être réalisées séparément, ce qui peut entraîner une simplification importante du processus de production.

Dans une forme de réalisation particulièrement préférée de l'élément de séparation selon la présente invention, chaque partie de l'élément de séparation comprend une paroi fermée comportant une ou plusieurs ouvertures, tandis que les ouvertures pratiquées dans les deux parois sont prévues pour être opposées l'une à l'autre et tandis que ces parois, autour de chaque ouverture, sont cintrées l'une vers l'autre et se raccordent l'une à l'autre de telle sorte qu'elles confèrent aux parois citées une section transversale convexe.

Dans une forme de réalisation très préférée, les parties citées de l'élément de séparation sont réalisées par moulage par injection. D'une part, un procédé de ce type est relativement simple. D'autre part, on peut utiliser en l'occurrence une matrice relativement simple. Lorsque les deux parties sont identiques quant à leur forme et quant à leurs dimensions (la surface de contact mentionnée représente dans ce cas en même temps le plan médian de l'élément de séparation), on peut réaliser les deux parties dans la même matrice.

Les parties citées de l'élément de séparation sont également soudées l'une à l'autre de préférence à l'aide de la technique de soudure spéculaire. De cette manière, on obtient une structure fermée possédant un cordon de soudure qui présente une étanchéité complète de manière fiable sur toute sa longueur. Enfin, on peut soumettre l'élément de séparation à un traitement final en éliminant le cordon de soudure par fraisage.

Dans sa forme de réalisation de loin préférée, l'élément de séparation selon la présente invention est réalisé en forme de panneau et comprend au moins une rangée horizontale d'ouvertures prévues les unes à côté des autres et séparées les unes des autres par la structure fermée citée, tandis que chaque ouverture possède une forme oblongue et s'étend principalement en direction verticale.

De préférence, chaque ouverture possède une forme oblongue dont les parties terminales possèdent une forme principalement semi-circulaire. Ainsi, on obtient la possibilité d'ébarber le cordon de soudure se trouvant dans l'ouverture (après la soudure spéculaire) en un seul et même mouvement de fraisage avec une fraise dont le diamètre est égal à la largeur de l'ouverture.

De préférence, on réalise l'élément de séparation en une matière synthétique thermoplastique, de préférence une matière synthétique choisie parmi le groupe des polyoléfines telles que par exemple le polyéthylène ou le polypropylène.

Des matières synthétiques mentionnées en dernier lieu sont préférées par le fait qu'elles manifestent une résistance particulièrement bonne contre les produits chimiques agressifs - provenant entre autres des détergents et des désinfectants - que l'on retrouve dans la plupart des étables.

La présente invention est expliquée davantage dans la description non limitative ci-après d'une forme de réalisation préférée d'un élément de séparation selon la présente invention.

Dans cette description, on se réfère aux figures annexées dans lesquelles
- les figures 1, 2 et 3 sont des dessins en perspective de trois éléments de séparation différents selon la présente invention, et
- la figure 4 représente en perspective, à plus grand échelle, la partie de l'élément de séparation de la figure 1 qui est indiqué dans cette figure à l'aide d'une ligne en points et en traits, agrandie.

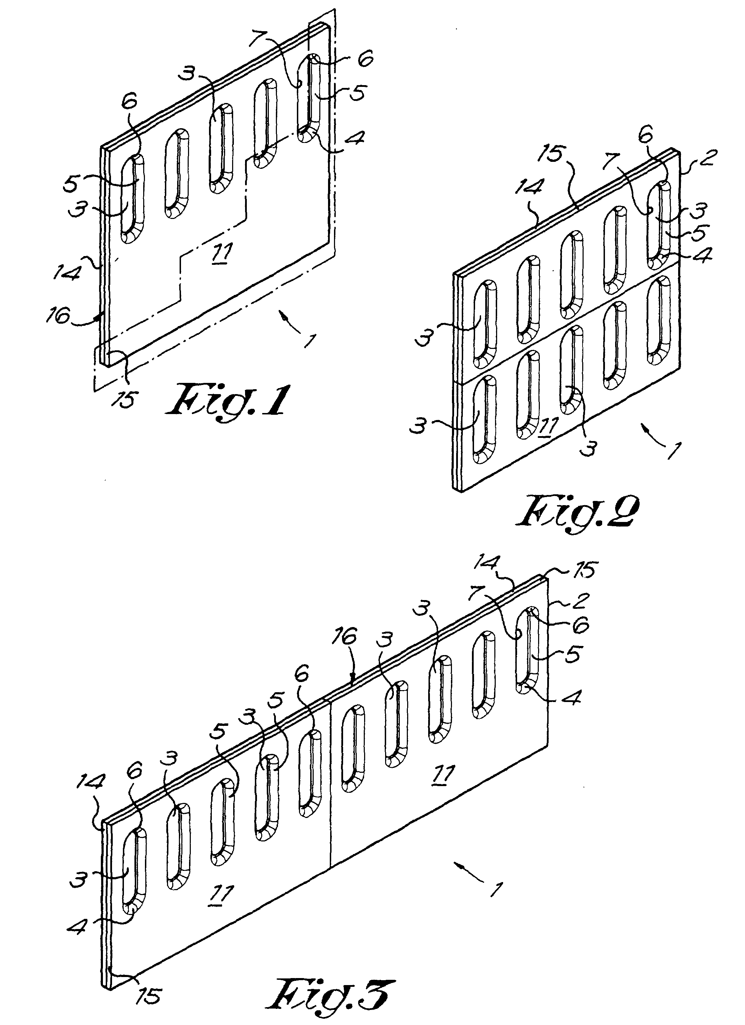

L'élément de séparation (1) représenté en figure 1 comprend une structure fermée rectangulaire (2) en forme de panneau constituée d'une matière synthétique thermoplastique, dans laquelle on prévoit cinq ouvertures transversales (3). Ces ouvertures (3) sont disposées en une rangée horizontale et sont prévues dans la moitié supérieure de la structure fermée (2) en forme de panneau. Chaque ouverture possède une forme oblongue possédant un côté supérieur et un côté inférieur arrondis, et s'étend en direction verticale. Les ouvertures sont suffisamment étroites pour empêcher que les animaux ne s'appuient avec leurs pattes sur leur paroi inférieure et sont suffisamment grandes pour permettre une circulation d'air optimale au niveau des animaux.

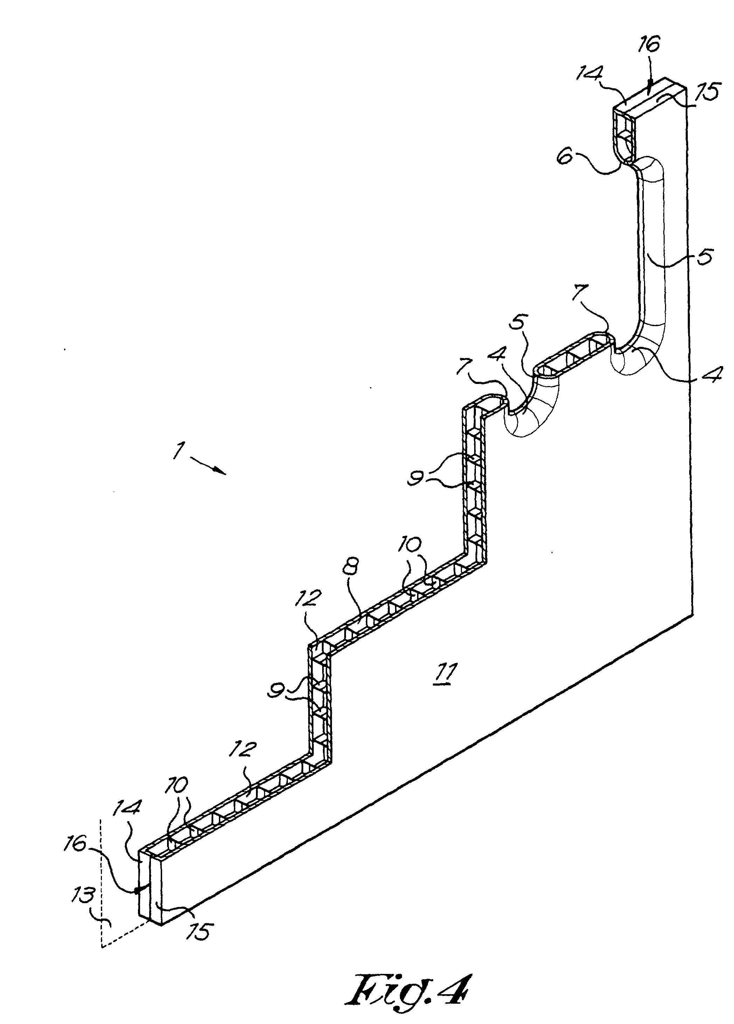

Comme on peut le voir au mieux en figure 4, les parois (4, 5, 6, 7) de la structure fermée (2) qui délimitent les ouvertures (3) possèdent des sections transversales convexes orientées vers le milieu de l'ouverture (3). Ces sections transversales possèdent approximativement la forme d'un demi-cercle.

L'élément de séparation (1) comprend deux parois fermées planes parallèles (11), (12) qui forment les deux côtés dé la structure fermée (2), écartés l'un de l'autre à une certaine distance. Ces deux parois (11), (12) sont reliées l'une à l'autre à leurs bords périphériques via des surfaces latérales (16) s'étendant en direction transversale. Aux bords entourant les ouvertures (3), ces parois planes (11), (12) sont reliées l'une à l'autre par les parois citées (4, 5, 6, 7) possédant des sections transversales convexes. L'espace libre ménagé entre les parois planes (11), (12) est, de cette manière, complètement fermé, d'une part, par les surfaces latérales (16) et, d'autre part, par les parois convexes (4, 5, 6, 7).

Dans cet espace interne, on prévoit une structure nervurée constituée par une série de nervures horizontales (9) s'étendant les unes à côté des autres avec un petit écartement, et par une série de nervures verticales (10) s'étendant les unes à côté des autres avec un petit écartement, qui croisent les nervures horizontales (9). Toutes les nervures (9, 10) relient les parois planes parallèles (11), (12) et s'étendent entre ces surfaces en suivant une direction transversale verticale.

L'élément de séparation (1) est composé de deux parties (14), (15) complètement identiques qui se raccordent l'une à l'autre le long de la surface médiane longitudinale (13) de l'élément de séparation (1). Chaque partie comprend, par conséquent, une paroi plane (11), (12) comprenant des surfaces s'étendant en direction transversale à partir des bords périphériques (la largeur de ces surfaces représente la moitié de la largeur des surfaces latérales mentionnées ci-dessus) et dont les bords autour des ouvertures (3) sont munis d'une partie cintrée possédant une forme cylindrique ininterrompue, qui s'étend par rapport à la paroi plane dans la même direction et sur la même distance que celles des surfaces citées. En plaçant l'une contre l'autre les deux parties avec leurs surfaces analogues et leurs parties cintrées, on obtient l'élément de séparation complet (1), les surfaces se raccordant l'une à l'autre formant les surfaces latérales (16) précitées et les parties cintrées de forme cylindrique se raccordant l'une à l'autre formant les parois (4, 5, 6, 7) des ouvertures.

Les deux parties (14), (15) sont réalisées séparément par moulage par injection dans la même matrice et sont ensuite reliées l'une à l'autre au moyen de la technique de soudure spéculaire ou de la technique de soudure par aboutement.

Grâce à la structure nervurée interne (9, 10), il est possible de scier l'élément de séparation (1) pour obtenir un élément possédant des dimensions inférieures, tout en conservant une structure (2) complètement fermée.

En plaçant l'une par-dessus l'autre ou l'une à côté de l'autre des parties de l'élément de séparation décrit ci-dessus et en les soudant l'une à l'autre, on peut former de nouveaux éléments de séparation possédant des dimensions différentes ou possédant plusieurs rangées d'ouvertures disposées les unes par-dessus les autres. Dans les figures 2 et 3, on illustre cette variante.

En éliminant à la scie les moitiés supérieures, par exemple de deux éléments de séparation selon la figure 1 et en plaçant ces moitiés l'une par-dessus l'autre et en les soudant l'une à l'autre, par exemple via la technique de soudure spéculaire, on peut former un élément de séparation possédant deux rangées horizontales d'ouvertures, comme représenté en figure 2.

On peut également souder ces moitiés l'une à côté de l'autre pour obtenir un élément de séparation possédant une seule rangée d'ouvertures dont la hauteur représente la moitié de celle de l'élément original et dont la longueur représente le double de celle de l'élément original. Cette variante est représentée en figure 3.

## Revendications

1. Elément de séparation (1) pour un emplacement où séjournent des animaux, comprenant une structure fermée (2) réalisée en une matière synthétique, dans laquelle sont prévues une ou plusieurs ouvertures transversales (3), **caractérisé en ce que** chaque ouverture transversale (3) est délimitée par des parois (4, 5, 6, 7) possédant une section transversale convexe et **en ce que** la structure fermée (2) comprend un ou plusieurs espaces creux internes (8) dans lesquels on prévoit des nervures (9, 10).

2. Elément de séparation (1) selon la revendication 1, **caractérisé en ce que** la section transversale des parois citées (4, 5, 6, 7) est principalement de forme circulaire.

3. Elément de séparation (1) selon la revendication 1 ou 2, **caractérisé en ce que** l'élément de séparation (1) comprend deux parois fermées (11), (12) écartées l'une de l'autre à une certaine distance et **en ce qu'**on prévoit, entre ces parois, une structure nervurée (9, 10) qui comprend plusieurs nervures se raccordant aux deux parois (11), (12) et se croisant l'une l'autre.

4. Elément de séparation (1) selon l'une quelconque des revendications précédentes, **caractérisé en ce que** l'élément de séparation (1) comprend deux parties (14), (15) venant se disposer l'une contre l'autre le long d'une surface de contact longitudinale (13).

5. Elément de séparation (1) selon les revendications 3 et 4, **caractérisé en ce que** chaque partie (14), (15) de l'élément de séparation (1) comprend une paroi fermée (11), (12) comportant une ou plusieurs ouvertures, **en ce que** les ouvertures pratiquées dans les deux parois (11), (12) sont prévues pour se faire mutuellement face, et **en ce que** ces parois (11), (12), autour de chaque ouverture (3), sont cintrées l'une vers l'autre et se raccordent l'une à l'autre si bien qu'elles confèrent aux parois précitées (4, 5, 6, 7) une section transversale convexe.

6. Elément de séparation (1) selon la revendication 4 ou 5, **caractérisé en ce que** chaque partie (14), (15) de l'élément de séparation (1) est réalisée par moulage par injection.

7. Elément de séparation (1) selon la revendication 6, **caractérisé en ce que** les parties citées (14), (15) sont soudées l'une à l'autre à l'aide de la technique de soudure spéculaire.

8. Elément de séparation (1) selon l'une quelconque des revendications précédentes, **caractérisé en ce qu'**il possède la forme d'un panneau et **en ce qu'**il comprend au moins une rangée horizontale d'ouvertures (3) prévues les unes à côté des autres et séparées l'une de l'autre par la structure fermée (2), et **en ce que** chaque ouverture (3) possède une forme oblongue et s'étend principalement en direction verticale.

9. Elément de séparation (1) selon l'une quelconque des revendications précédentes, **caractérisé en ce que** chaque ouverture possède une forme oblongue dont les parties terminales possèdent une forme principalement semi-circulaire.

10. Elément de séparation (1) selon l'une quelconque des revendications précédentes, **caractérisé en ce qu'**il est réalisé en une matière synthétique thermoplastique.

## Patentansprüche

1. Raumtrennelement (1) für Tierställe, bestehend aus einer geschlossenen Struktur (2), ausgerührt in synthetischem Material, in der eine oder mehrere quer liegende Öffnungen (3) vorgesehen sind, **dadurch gekennzeichnet, dass** jede quer liegende Öffnung (3) durch Wände (4, 5, 6, 7) mit einem konvexen Querschnitt begrenzt ist und dass die geschlossene Struktur (2) einen oder mehrere innere Hohlräume (8) umfasst, in denen Rippen (9, 10) angebracht sind.

2. Raumtrennelement (1) gemäß Anspruch 1, **dadurch gekennzeichnet, dass** der Querschnitt der genannten Wände (4, 5, 6, 7) hauptsächlich eine kreisförmige Form aufweist.

3. Raumtrennelement (1) gemäß Anspruch 1 oder 2, **dadurch gekennzeichnet, dass** das Trennelement (1) zwei geschlossene Wände (11), (12) umfasst, die einen bestimmten Abstand voneinander haben, und dass zwischen diesen Wänden eine Rippenstruktur (9, 10) vorgesehen ist, die mehrere Rippen umfasst, die sich an die zwei Wände (11), (12) anschließen und die sich gegenseitig kreuzen.

4. Raumtrennelement (1) gemäß irgendeinem der vorhergehenden Ansprüche, **dadurch gekennzeichnet, dass** das Trennelement (1) zwei Teile (14), (15) aufweist, die entlang einer in Längsrichtung verlaufenden Kontaktfläche (13) aneinander liegen.

5. Raumtrennelement (1) gemäß den Ansprüchen 3 und 4, **dadurch gekennzeichnet, dass** jedes Teil (14), (15) des Trennelements (1) eine geschlossene Wand (11), (12) umfasst, die mehrere Öffnungen aufweist" dass die in den beiden Wänden (11), (12) angebrachten Öffnungen vorgesehen sind, einander gegenüber zu liegen, und dass diese Wände (11), (12) um jede Öffnung (3) herum zueinander tailliert sind und sich aneinander anschließen, so dass die vorgenannten Wände (4, 5, 6, 7) einen konvexen Querschnitt erhalten.

6. Raumtrennelement (1) gemäß Anspruch 4 oder 5, **dadurch gekennzeichnet, dass** jedes Teil (14), (15) des Trennelements (1) nach dem Spritzgussverfahren hergestellt wird.

7. Raumtrennelement (1) gemäß Anspruch 6, **dadurch gekennzeichnet, dass** die genannten Teile (14), (15) mittels des Spiegelschweißverfahrens aneinander geschweißt sind.

8. Raumtrennelement (1) gemäß irgendeinem der vorhergehenden Ansprüche, **dadurch gekennzeichnet, dass** es die Form eines Paneels hat und mindestens eine Reihe horizontaler Öffnungen (3) aufweist, die nebeneinander liegen und durch die geschlossene Struktur (2) voneinander getrennt sind, und dass jede Öffnung (3) eine längliche Form hat und sich hauptsächlich in vertikaler Richtung erstreckt.

9. Raumtrennelement (1) gemäß irgendeinem der vorhergehenden Ansprüche, **dadurch gekennzeichnet, dass** jede Öffnung eine längliche Form hat, deren Enden hauptsächlich die Form eines Halbkreises haben.

10. Raumtrennelement (1) gemäß irgendeinem der vorhergehenden Ansprüche, **dadurch gekennzeichnet, dass** es in einem thermoplastischen synthetischen Material ausgeführt wird.

## Claims

1. Partitioning wall (1) for a place where animals live, comprising a closed structure (2) made of a synthetic material in which are provided one or several transversal openings (3), **characterised in that** each transversal opening (3) is confined by walls (4, 5, 6, 7) having a convex cross section, and **in that** the closed structure (2) comprises one or several inner cavities (8) in which ribs (9, 10) are provided.

2. Partitioning wall (1) according to claim 1, **characterised in that** the cross section of the above-mentioned walls (4, 5, 6, 7) has a predominantly circular shape.

3. Partitioning wall (1) according to claim 1 or 2, **characterised in that** the partitioning wall (1) comprises two closed walls (11), (12) at a certain distance from one another, and **in that** a ribbed structure (9, 10) with several ribs connected to both walls (11), (12) and crossing one another is provided between these walls.

4. Partitioning wall (1) according to any of the preceding claims, **characterised in that** the partitioning wall (1) comprises two parts (14), (15) placed one against the other along a longitudinal contact surface (13).

5. Partitioning wall (1) according to claims 3 and 4, **characterised in that** each part (14), (15) of the partitioning wall (1) comprises a closed wall (11), (12) with one or several openings, **in that** the openings provided in the two walls (11), (12) face one another, and **in that** the walls (11), (12) around each opening (3) are bent towards one another and mutually connect, such that the above-mentioned walls (4, 5, 6, 7) have a convex cross section.

6. Partitioning wall (1) according to claim 4 or 5, **characterised in that** each part (14), (15) of the partitioning wall (1) is made by means of injection moulding.

7. Partitioning wall (1) according to claim 6, **characterised in that** the above-mentioned parts (14), (15) are welded together by means of mirror welding.

8. Partitioning wall (1) according to any of the preceding claims, **characterised in that** it has the shape of a panel and **in that** it comprises at least a horizontal row of openings (3) provided next to one another and separated from one another by the closed structure (2), and **in that** each opening (3) has an oblong shape and mainly extends vertically.

9. Partitioning wall (1) according to any of the preceding claims, **characterised in that** each opening has an oblong shape whose far ends have a predominantly semi-circular shape.

10. Partitioning wall (1) according to any of the preceding claims, **characterised in that** it is made of a thermoplastic synthetic material.
